# EUROPÄISCHE PATENTSCHRIFT

(11) **EP 1 667 899 B1**
(45) Veröffentlichungstag und Bekanntmachung des Hinweises auf die Patenterteilung: **06.11.2013**
(21) Anmeldenummer: 04765661.6
(22) Anmeldetag: 28.09.2004
(51) Int. Cl.: B63B 29/22, A47C 15/00, A47J 37/07, B63B 35/76

(54) **SCHWIMMFÄHIGE FREIZEITSPLATTFORM**
FLOATING LEISURE PLATFORM
PLATE-FORME DE LOISIRS FLOTTANTE

(30) Priorität: 02.10.2003 DE 10347159; 12.02.2004 DE 102004008155
(43) Veröffentlichungstag der Anmeldung: 14.06.2006
(73) Patentinhaber: Zeus GmbH & Co. KG, 65604 Elz (DE)
(72) Erfinder: SCHMITT, Sebastian, 70178 Stuttgart (DE)
(74) Vertreter: Dreiss
(86) Internationale Anmeldenummer: PCT/EP2004/010852
(87) Internationale Veröffentlichungsnummer: WO 2005/032931

(56) Entgegenhaltungen:
- EP-A- 0 396 829
- AU-B- 640 470
- CA-A- 2 434 062
- FR-A- 2 796 034
- GB-A- 122 716
- GB-A- 265 091
- US-A- 2 520 412
- US-A- 4 115 888
- US-B1- 6 257 943

## Beschreibung

Die Erfindung betrifft eine schwimmfähige Freizeitplattform.

Schwimmfähige Plattformen sind in Form eines Floßes bekannt. Derartige Floße besitzen jedoch eine geringe Attraktivität. Bekannt ist außerdem der Einsatz von mietfähigen, mit Muskelkraft angetriebenen Booten auf Gewässern (Tretboote). Diese Geräte stellen nach dem heutigen Freizeitbedarf der Bevölkerung keine befriedigende Lösung mehr da.

Aus der US 5,518,431A , der als nächtsliegender Stand der Technik angesehen wird, ist ein Schwimmgerät bekannt, das einen torusförmigen Aufbau besitzt, und bei dem in einen einteiligen aufblasbaren Körper mehrere Sitzelemente lose einsetzbar sind.

Der Erfindung liegt daher die Aufgabe zugrunde eine schwimmfähige Freizeitplattform bereit zu stellen, die einen hohen Freizeitwert aufweist, attraktiv ist eine größere Nutzungsmöglichkeit aufweist und einfach aufbaubar ist.

Diese Aufgabe wird mit einer Freizeitplattform gelöst, die die Merkmale des Anspruchs 1 aufweist.

Die erfindungsgemäße Freizeitplattform kombiniert die beiden an sich bekannten Gegenstände wie schwimmfähige, mit Muskelkraft angetriebene Boote (Tretboote) mit einer in der Plattform integrierten und schwimmend gelagerten Grilleinheit. Sie kann mit zwei an der Plattform befestigten, Antrieben ausgestattet werden. Alle Verbindungen der tragenden Bauteile sind steckbar ausgeführt, sodass ein leicht zu transportierendes und mit wenig Platzbedarf zu verstauendes (z.B.: für die Unterbringung des Gerätes außerhalb der Badesaison) Freizeitgerät entsteht.

Weitere vorteilhafte Maßnahmen sind in den Unteransprüchen beschrieben.

Die Erfindung ist in Zeichnungen dargestellt und wird nachfolgend näher beschrieben.

Die Freizeitplattform ist auf allen Wasseroberflächen zur Freizeitgestaltung einsetzbar und insbesondere mit einer Fortbewegungsmöglichkeit in Form von Antriebseinheiten ausgestattet ist. Die Plattform besitzt Erhitzungsvorrichtung, insbesondere einen Grill, einen Wok oder dergleichen für Lebensmittel mit Schutzvorrichtung vor unbeabsichtigtes Berühren dieser Vorrichtung, sowie einem verstellbaren Sonnenschirm.

Eine Kombination aus Fortbewegung auf Wasseroberflächen, sowie der gleichzeitigen Möglichkeit des Zubereitens von Lebensmitteln ist neu. Durchaus bekannt ist ein von einer Person tragbaren Erhitzungsvorrichtung für Lebensmittel (DE 101 45 231).

Dabei werden mit der erfindungsgemäßen Freizeitplattform die Nutzungsmöglichkeiten erweitert, indem die Freizeitplattform mit Ausstattungen wie Antrieb, Sonnenschirm, Sitzmöglichkeit, Ablage, Aufbewahrungsfächern und Erhitzungsvorrichtung für Lebensmittel versehen ist, so dass Besitzer von Freizeitparks, Campingplätzen oder Baggerseen usw. die Freizeitplattform Gästen anbieten können.

Vorteilhaft an der Freizeitplattform ist, dass sie zur Steigerung der Attraktivität von Freizeitzentren bereitgestellt werden kann, so dass sie kostenfrei benutzt oder gemietet werden kann.

Die flexible und einfache gewerbliche Nutzbarkeit der Freizeitplattform, sowie die Möglichkeit, damit neue Geschäftsbereiche z.B. für alle Arten von Freizeitparks, Campingplätze, Baggerseen, usw. zu erschließen, zeichnet die erfindungsgemäße Freizeitplattform gegenüber einem herkömmlichen Floß aus.

Bei einer Variante der Erfindung ist an Stelle der Erhitzungsvorrichtung (A) oder zusätzlich zu dieser eine Aufbewahrungsvorrichtung für Gasflaschen, insbesondere Sauerstoffflaschen für Taucher vorgesehen. Die Freizeitplattform besitzt dadurch einen größeren Freizeitwert. Alternativ oder wiederum zusätzlich kann eine Vorrichtung zum Beobachten des Meeresbodens vorgesehen sein, die modulartig an Stelle der Erhitzungsvorrichtung eingesetzt werden kann. Zum besseren Betrachten des Meeresbodens weist die Beobachtungsvorrichtung eine Vergrößerungslinse auf. Ferner können Unterwasserscheinwerfer vorgesehen sein.

Weitere Vorteile, Merkmale und Einzelheiten der Erfindung ergeben sich aus der nachfolgenden Beschreibung, in der unter Bezugnahme auf die Zeichnung ein besonders bevorzugtes Ausführungsbeispiel der Erfindung im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: einen Längsschnitt der Freizeitplattform;
- Figur 2: einen Querschnitt der Freizeitplattform;
- Figur 3: eine perspektivische Ansicht der Freizeitplattform; und
- Figur 4: eine Detailansicht der schwimmend gelagerten Grilleinheit.

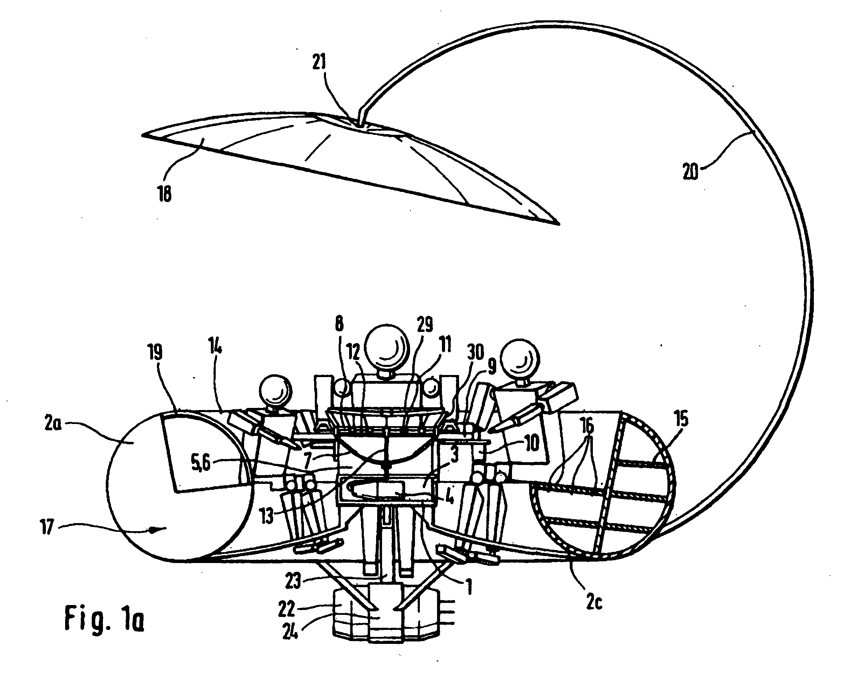

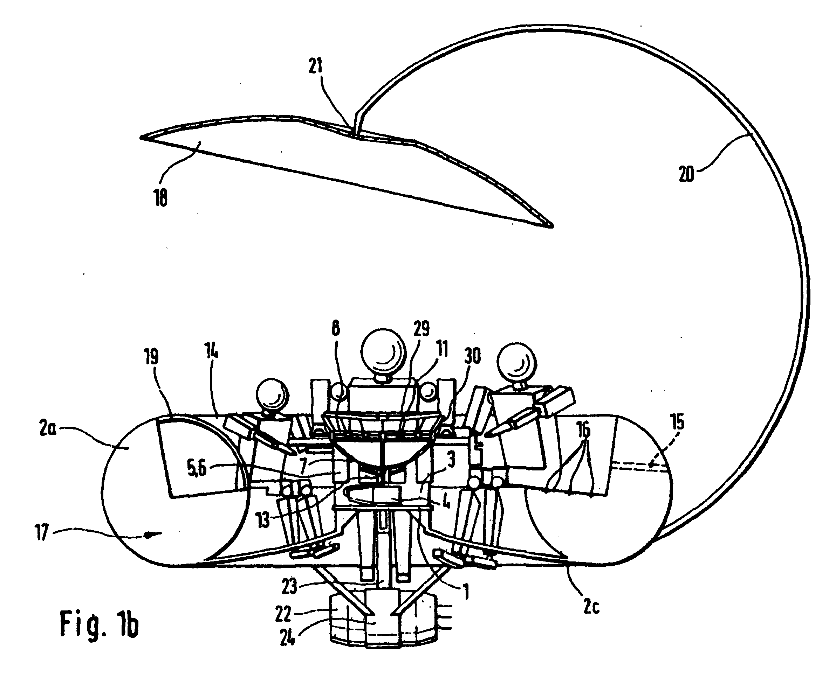

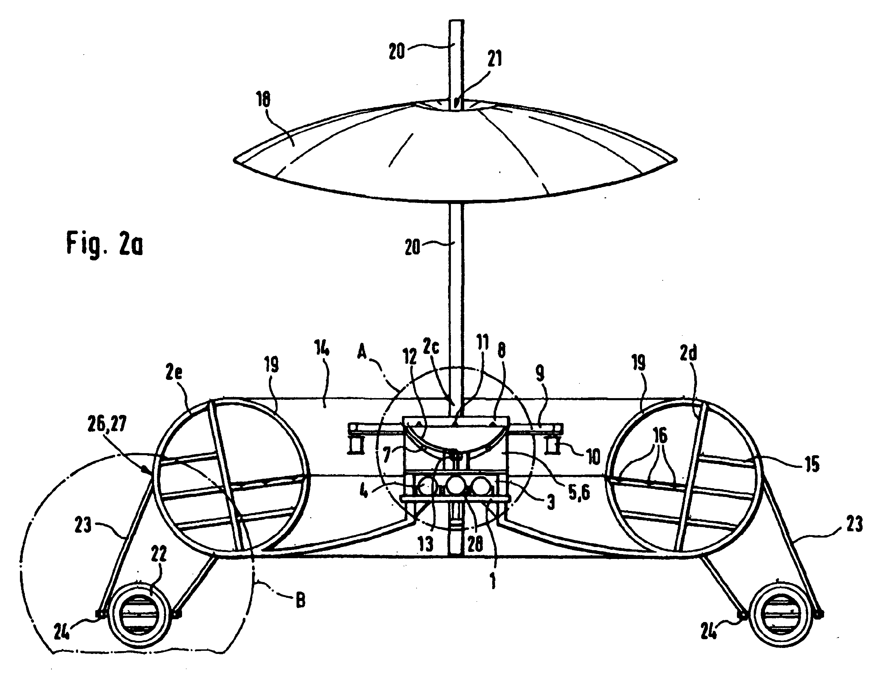

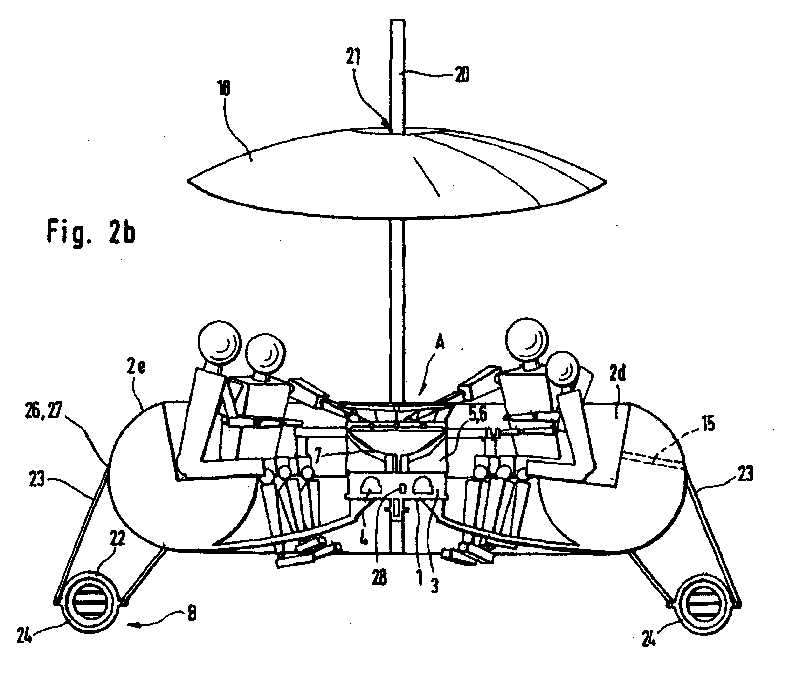

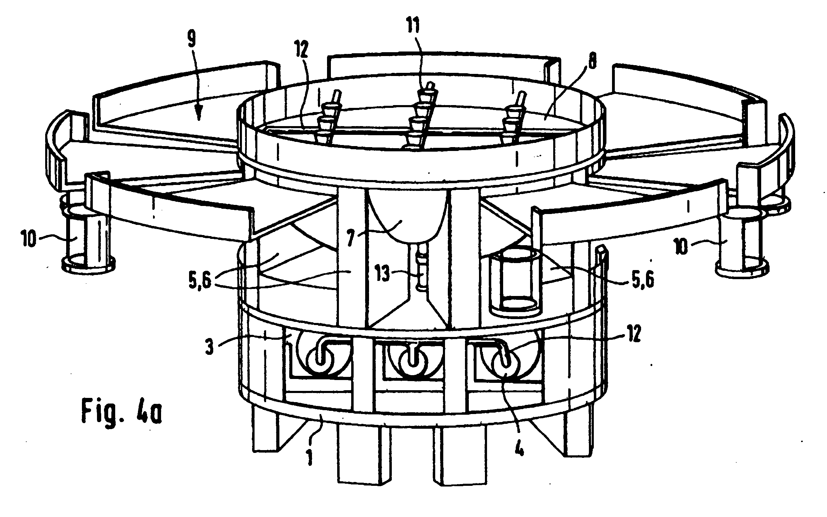

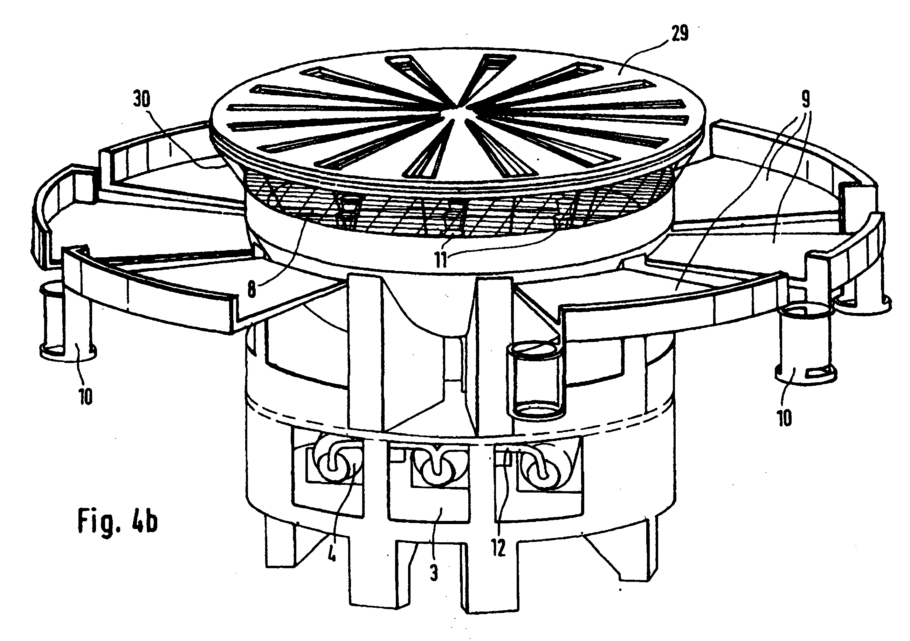

Die Figuren 1 bis 4 zeigen eine torusförmige Freizeitplattform einer bevorzugten Ausführungsform, die im Wesentlichen aus einer zentralen Bodenplatte 1 besteht, an der fünf Hauptträger 2a bis 2e angesteckt, und über Steckbolzen gesichert werden. Auf der Bodenplatte 1 wird ein Aufbewahrungsfach 3 für Gasflaschen 4 einer Erhitzungsvorrichtung A, nämlich eines Grills befestigt (siehe auch Figur 4).

Auf dem Aufbewahrungsfach 3 werden acht Tragklötze 5 befestigt, die zur Grillschalenaufnahme und Einteilung der einzelnen, sitzplatzzugeordneten Aufbewahrungsfächern 6 benötigt werden. Die Tragklötze 5 besitzen eine auf der schrägen Seite untergebrachte und einfach gelagerte Kugel 7, die die schwimmende Lagerung der Grillschale 8 gewährleistet (Figur 4).

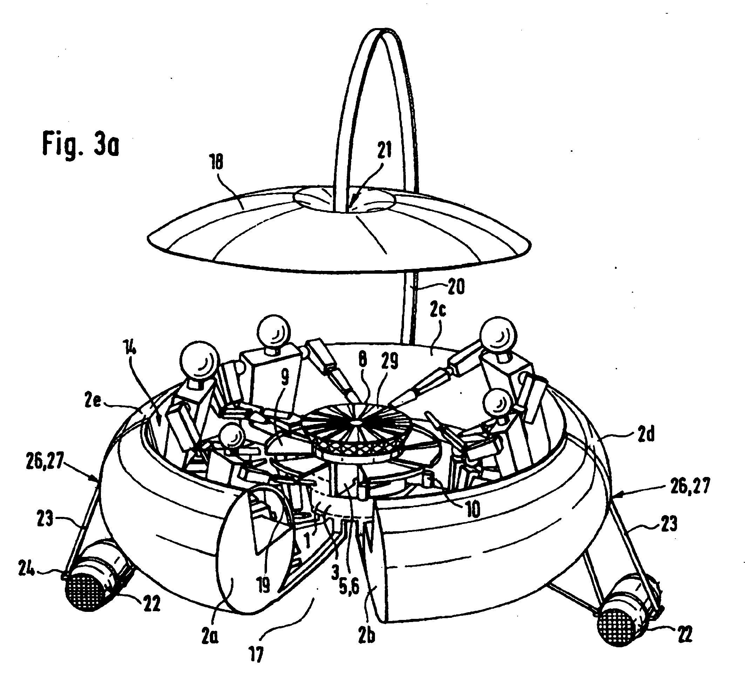

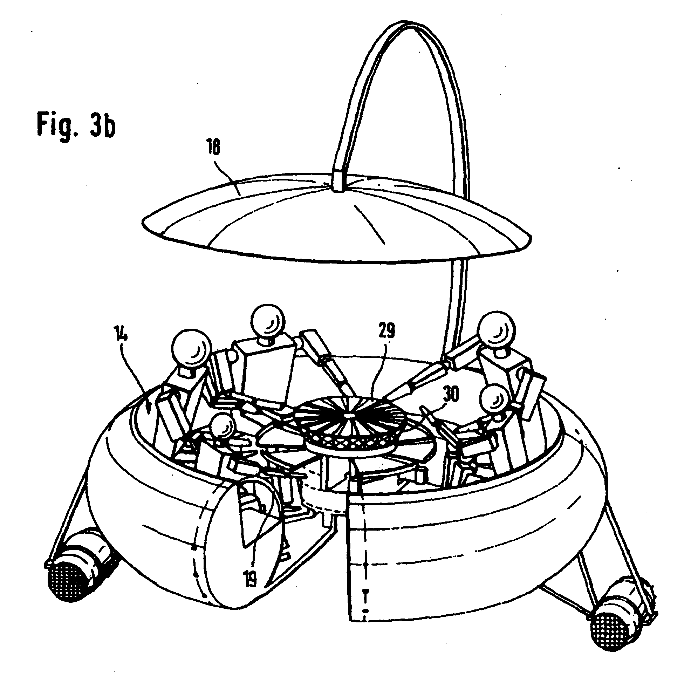

Zwischen die Trageklötze 5 werden sieben Tischeinheiten 9 befestigt. An der Eingangsseite ist die Tischeinheit ausgelassen (siehe Figur 3). Diese Tischeinheiten 9, die aus einem Material gefertigt sind, besitzen einen Tisch mit Rand gegen das Verlieren von Gegenständen, sowie eines der Aufbewahrungsfächer 6 für jeden einzelnen Insassen. An diesen Tischeinheiten 9 können zusätzlich Getränkehalterungen 10 befestigt werden.

Die Grillschale 8, bestückt mit Gasbrennern 11, die mit flexiblen Gasschläuchen 12 untereinander und mit den Gasflaschen 4 über eine Steckkupplung 13 verbunden sind, besitzt eine Schutzvorrichtung 29, die die Insassen vor unbeabsichtigtes Berühren mit dem Grillrost schützt. Sie wird über Abstandshalterungen 30 (siehe Figur 4) mit der Grillschale 8 verschraubt.

Die Schutzvorrichtung 29 ist thermisch getrennt, so dass sie die Hitze der Unterseite nicht auf die Oberseite übertragen kann. Sie besteht aus zwei Scheiben, die durch ihre Einschlitzungen den vom Grillen verursachten Rauch durchlassen (siehe Figur 4).

Durch den Einsatz von flexiblen Gasschläuchen 12, wird die Bewegungsfreiheit der Grillschale 8 gegen unerwartete Erschütterungen nicht beeinträchtigt. Bei Bedarf kann die Grillschale 8 aus der durch die Abformung der Kontur der Grillschale 8 entstandenen Mulde entnommen werden. Die Tragklötze 5 und die Tischeinheit 9 bilden dabei durch ihre der Grillschale 8 nachempfundenen Außenform, diese Mulde.

Nach dem Zusammensetzen der in Figur 4 gezeigten Grilleinheit, werden die aus Kunststoff tiefgezogenen Sitzringsegmente 14 zwischen die Hauptträger 2a bis 2e geschoben. Diese Sitzringsegmente 14 können gleich groß sein und auch aus einem aufblasbarem Material bestehen. Drei Hauptträger 2c, 2d und 2e besitzen auf jeder Seite drei Führungsschienen 15, die dazu dienen, die Sitzringsegmente 14 mit den Hauptträgern 2a bis 2e zu verbinden. Sie gewährleisten außerdem den richtigen Sitz der Sitzringsegmente 14.

Die Sitzringsegmente 14 werden durch am Rand der Sitzflächen jeweils außen angebrachten, konischen Löschern mit Schrauben 16 mit den Hauptträgern 2a, 2e kraftschlüssig verschraubt. Die Hauptträger 2a, 2b besitzen jeweils nur auf einer Seite Führungsschienen 15, so dass ein Eingangsbereich 17 (siehe Figur 3) entsteht. Die Hauptträger 2a, 2b besitzen zusätzlich jeweils einen viertelkreisförmigen Handlauf 19. Dadurch wird der Eingangsbereich 17, sowie ein sicherer Einstieg ermöglicht.

Nach dem Zusammensetzen der oben beschriebenen Komponenten, ist eine ringförmige, schwimmfähige Plattform, mit von der Hauptkonstruktion abgelösten Grilleinheit entstanden. Als nächstes werden Antriebseinheiten B sowie ein Sonnenschirm 18 montiert. Der Sonnenschirm 18 wird an ein gebogenes Hohlprofil 20, das am Hauptträger 2c angesteckt ist, über eine flexible Halterung 21 befestigt. Die flexible Halterung 21 dient dazu, den Sonnenschirm 18 in alle Richtungen drehen zu können, um die gesamte Plattform je nach Bedarf zu schattieren.

Um die Freizeitplattform auf Wasseroberflächen bewegen zu können, werden an den Hauptträgern 2d, 2e die Antriebseinheiten B beweglich montiert. Die Antriebseinheiten B bestehen jeweils aus einem aus dem Tauchsport bekannten motorischen Taucherantrieb 22, sowie einer Hauptaufnahme 23 und einer Befestigungsschelle 24. Der Taucherantrieb 22 wird zwischen die Hauptaufnahme 23 und die Befestigungsschelle 24 geklemmt, da diese Bauteile zusammen den Innendurchmesser des Außendurchmessers des Taucherantriebs 22 besitzen. Die Hauptaufnahme 23 und die Befestigungsschelle 24 werden mit Schrauben miteinander verschraubt. Für den Fall, dass die Plattform auf dem Grund z.B. eines Sees aufsetzt, sind die Antriebseinheiten B mit den Hauptträgern 2d, 2e gelenkig verbunden. Dies geschieht durch eine jeweils an den Hauptträgern 2d, 2e angebrachten Hülse 26. Die Hauptaufnahme 23 ist oben gabelförmig ausgebildet, sodass sie die Hülse 26 umschließen kann. Mit einem Bolzen 27 wird eine gelenkige Verbindung der Antriebseinheit B sowie den Hauptträgern 2d, 2e erreicht.

Gesteuert wird die Plattform über ein Kontrollpad. Darauf befinden sich zwei Knöpfe. Drückt man den linken Knopf, springt der rechte Tauchermotor 22 an und die Plattform macht eine Linksdrehung. Drückt man den rechten Knopf auf dem Kontrollpad, springt der linke Tauchermotor 22 an und die Plattform macht eine Rechtsdrehung. Drückt man beide Knöpfe gleichzeitig, fährt die Plattform geradeaus.

Das Kontrollpad ist mit einem Kabel an der zentral im Aufbewahrungsfach 3 untergebrachten Steuerelektronik 28 verbunden. Von der Steuerelektronik 28 gehen zwei Kabel durch die Hauptträger 2d, 2e zu den jeweiligen Antriebseinheiten B, um die auf dem Kontrollpad betätigten Steuerbefehle an die Antriebseinheiten B weitergeben zu können, um somit die Navigation der Plattform zu ermöglichen.

Besonders hervorzuheben ist, dass alle Bauteile als Module ausgebildet sind, so dass deren Herstellung preiswert ist und der Aufbau der Freizeitplattform schnell ermöglicht werden kann. Außerdem ist der Platzbedarf zum Verstauen gering, da die Plattform im demontierten oder teildemontierten Zustand gelagert werden kann.

## Patentansprüche

1. Schwimmfähige Freizeitplattform mit einer Erhitzungsvorrichtung (A) für Lebensmittel sowie einer Sitzmöglichkeit für eine oder mehrere Personen, **dadurch gekennzeichnet, dass** die Freizeitplattform torusförmig ausgebildet ist, dass sie eine Bodenplatte (1) aufweist, an der Hauptträger (2a - 2e) angesteckt sind und dass zwischen den Hauptträgern (2a - 2e) Sitzringelemente (14) vorgesehen sind, wobei die Sitzringelemente (14) im Vertikalschnitt einen dreiviertelkreisförmigen Querschnitt aufweisen und eine Sitzfläche ausbilden und dass eine Antriebsmöglichkeit (B) vorgesehen ist, mittels welcher die Freizeitplattform auf Wasseroberflächen frei in alle Richtungen bewegbar ist.

2. Freizeitplattform nach Anspruch 1, **dadurch gekennzeichnet**, das sie aus Modulen zusammensetzbar ist.

3. Freizeitplattform nach einem der vorhergehenden Ansprüche, **dadurch gekennzeichnet, dass** sie Aufbewahrungsfächer (5, 6) für Lebensmittel aufweist.

4. Freizeitplattform nach Anspruch 3, **dadurch gekennzeichnet, dass** an den Aufbewahrungsfächern (5, 6) für Lebensmittel, Tischeinheiten anschließbar sind.

5. Freizeitplattform nach einem der vorhergehenden Ansprüche, **dadurch gekennzeichnet, dass** an dieser Freizeitplattform ein Sonnenschirm (18) mit einem Tragprofil (20) befestigbar ist.

6. Freizeitplattform nach Anspruch 5, **dadurch gekennzeichnet, dass** die Verbindung zwischen Sonnenschirm (18) und dem Tragprofil (20) mit einer flexiblen Verbindung (21) versehen ist und es damit ermöglicht, der oder den Personen Schatten zu spenden.

7. Freizeitplattform nach einem der vorhergehenden Ansprüche, **dadurch gekennzeichnet, dass** die Freizeitplattform über ein mobiles Steuergerät steuerbar ist.

8. Freizeitplattform nach einem der vorhergehenden Ansprüche, **dadurch gekennzeichnet, dass** die Erhitzungsvorrichtung (A) schwimmend oder pendelnd gelagert wird, und sich somit immer horizontal ausbalancieren und Schwankungen der Plattform ausgleichen kann.

9. Freizeitplattform nach einem der vorhergehenden Ansprüche, **dadurch gekennzeichnet**, das die Erhitzungsvorrichtung (A) schwimmend über Tragklötze (5) mit eingelassener Kugel (7) gelagert ist.

10. Freizeitplattform nach einem der vorhergehenden Ansprüche, **dadurch gekennzeichnet, dass** die Erhitzungsvorrichtung (A) eine Schutzvorrichtung (29) aufweist, die die Personen vor unbeabsichtigtes Berühren der Erhitzungsvorrichtung (A) schützt.

11. Freizeitplattform nach Anspruch 10, **dadurch gekennzeichnet**, das die Schutzvorrichtung (29) thermisch getrennt ausgeführt ist, um die Hitze der Erhitzungsvorrichtung (A) nicht von der Unterseite zur Oberseite dieser Schutzvorrichtung (29) durch zu lassen.

12. Freizeitplattform nach einem der vorhergehenden Ansprüche, **dadurch gekennzeichnet, dass** die Sitzmöglichkeiten (14) und/oder Module der Freizeitplattform aus einem aufblasbarem Material bestehen.

13. Freizeitplattform nach einem der vorhergehenden Ansprüche, **dadurch gekennzeichnet, dass** Module der Freizeitplattform, z.B. Hauptträger (2a bis 2e), eine zentrale Bodenplatte (1), ein Aufbewahrungsfach (3), Tragklötze (5), Aufbewahrungsfächer (6), Tischeinheiten (9), Getränkehalterungen (10), Bauteile (23) und (24) aus Kunststoff bestehen.

## Claims

1. Floating leisure platform comprising a heating device (A) for food, and seats (14) for one or more persons, **characterized in that** the leisure platform is torusshaped, **in that** it comprises a bottom plate (1) to which main supports (2a - 2e) are attached and **in that** between the main supports (2a - 2e) seating ring segments (14) are provided, wherein the seating ring segments (14) have a vertical cross-section in the shape of a three-quarter circle and wherein the seating ring segments (14) form a seating surface, and **characterized in that** a drive means (B) is provided for freely moving the leisure platform in all directions on water surfaces.

2. Leisure platform according to claim 1, **characterized in that** it can be assembled from modules.

3. Leisure platform according to any one of the preceding claims, **characterized in that** it comprises storage compartments (5, 6) for food.

4. Leisure platform according to claim 3, **characterized in that** table units can be connected to the storage compartments (5, 6) for food.

5. Leisure platform according to any one of the preceding claims, **characterized in that** a sunshade (18) with support profile (20) can be mounted to this leisure platform.

6. Leisure platform according to claim 5, **characterized in that** the connection between the sun shade (18) and support profile (20) is provided with a flexible connection (21) which provides shade for the person or the persons.

7. Leisure platform according to any one of the preceding claims, **characterized in that** the leisure platform can be controlled via a mobile control device.

8. Leisure platform according to any one of the preceding claims, **characterized in that** the heating device (A) is disposed in a floating or suspended manner to always balance out in a horizontal direction, compensating for pitching of the platform.

9. Leisure platform according to any one of the preceding claims, **characterized in that** the heating device (A) is disposed in a floating manner via support blocks (5) with a central ball (7).

10. Leisure platform according to any one of the preceding claims, **characterized in that** the heating device (A) comprises a protective device (29) which protects the persons from inadvertent contact with the heating device (A).

11. Leisure platform according to claim 10, **characterized in that** the protective device (29) is thermally insulated to block heat from the heating device (a) from passing from the lower side to the upper side of this protective device (29).

12. Leisure platform according to any one of the preceding claims, **characterized in that** the seats (14) and/or modules of the leisure platform consist of an inflatable material.

13. Leisure platform according to any one of the preceding claims, **characterized in that** the modules of the leisure platform, e.g. main supports (2a through 2e), a central bottom plate (1), a storage compartment (3), supporting blocks (5), storage compartments (6), table units (9), drink holders (10), and components (23) and (24) consist of plastic material.

## Revendications

1. Plateforme de loisir flottante comprenant un dispositif de chauffage (A) pour des aliments et comprenant également une possibilité d'assise pour une ou plusieurs personnes, **caractérisée en ce que** la plateforme de loisir est toroïdale, **en ce qu'**elle comprend une plaque de base (1) sur laquelle des supports principaux (2a-2e) sont accrochés et **en ce que** des éléments de bague de siège (14) sont présents entre les supports principaux (2a-2e), les éléments de bague de siège (14) présentant en coupe verticale une section transversale en forme de trois quart de cercle et formant une surface d'assise, et **en ce qu'**une possibilité d'entraînement (B) permet de déplacer librement la plateforme de loisir sur des surfaces aquatiques dans toutes les directions.

2. Plateforme de loisir selon la revendication 1, **caractérisée en ce qu'**elle peut être composée de modules.

3. Plateforme de loisir selon l'une quelconque des revendications précédentes, **caractérisée en ce qu'**elle comprend des compartiments de stockage (5, 6) d'aliments.

4. Plateforme de loisir selon la revendication 3, **caractérisée en ce que** des unités formant table peuvent être raccordées aux compartiments de stockage (5, 6) d'aliments.

5. Plateforme de loisir selon l'une quelconque des revendications précédentes, **caractérisée en ce qu'**un parasol (18) pourvu d'un profilé de support (20) peut être fixé à cette plateforme de loisir.

6. Plateforme de loisir selon la revendication 5, **caractérisée en ce que** la liaison entre le parasol (18) et le profilé de support (20) est pourvue d'un raccord flexible (21), ce qui permet de faire de l'ombre à une ou plusieurs personnes.

7. Plateforme de loisir selon l'une quelconque des revendications précédentes, **caractérisée en ce que** la plateforme de loisir peut être commandée par un appareil de commande mobile.

8. Plateforme de loisir selon l'une quelconque des revendications précédentes, **caractérisée en ce que** le dispositif de chauffage (A) est monté flottant ou oscillant, et peut donc à chaque fois s'équilibrer horizontalement et compenser les fluctuations de la plateforme.

9. Plateforme de loisir selon l'une quelconque des revendications précédentes, **caractérisée en ce que** le dispositif de chauffage (A) est monté flottant par l'intermédiaire de cales de support (5) dans lesquelles est insérée une sphère (7).

10. Plateforme de loisir selon l'une quelconque des revendications précédentes, **caractérisée en ce que** le dispositif de chauffage (A) comprend un dispositif de protection (29) empêchant les personnes d'être involontairement en contact avec le dispositif de chauffage (A).

11. Plateforme de loisir selon la revendication 10, **caractérisée en ce que** le dispositif de protection (29) est thermiquement séparé, afin de ne pas laisser passer la chaleur du dispositif de chauffage (A) de la face inférieure à la face supérieure de ce dispositif de protection (29).

12. Plateforme de loisir selon l'une quelconque des revendications précédentes, **caractérisée en ce que** les possibilités d'assise (14) et/ou les modules de la plateforme de loisir sont constitués d'un matériau gonflable.

13. Plateforme de loisir selon l'une quelconque des revendications précédentes, **caractérisée en ce que** les modules de la plateforme de loisir, par exemple les supports principaux (2a à 2e), une plaque de base centrale (1), un compartiment de stockage (3), des cales de support (5), des compartiments de stockage (6), des unités table (9), des porte-gobelets (10), des éléments (23) et (24), sont constitués de matière plastique.
